# EUROPÄISCHE PATENTSCHRIFT

(11) **EP 0 699 555 B1**
(45) Veröffentlichungstag und Bekanntmachung des Hinweises auf die Patenterteilung: **18.10.2000**
(21) Anmeldenummer: 95111502.1
(22) Anmeldetag: 21.07.1995
(51) Int. Cl.: B60N 2/52

(54) **Schwingfähig abgestützter Fahrzeugsitz mit einer Neigungs- und/oder Höhenverstellung der Sitzfläche**
Rockably mounted vehicle seat with inclination and/or height adjustment of the seat part
Siège de véhicule monté oscillant à réglage de l'assise en inclinaison et/ou en hauteur

(30) Priorität: 09.08.1994 DE 4429405
(43) Veröffentlichungstag der Anmeldung: 06.03.1996
(73) Patentinhaber: Gebr. Isringhausen GmbH & Co. KG, 32657 Lemgo (DE)
(72) Erfinder: Winkelhake, Bernd, D-31675 Bückeburg (DE)
(74) Vertreter: Lange, Gerd, Dipl.-Ing.

(56) Entgegenhaltungen:
- EP-A- 0 513 636
- WO-A-89/06198
- DE-A- 2 532 974
- GB-A- 1 491 291
- US-A- 3 888 451
- US-A- 4 125 242

## Beschreibung

Die Erfindung betrifft einen schwingfähig abgestützten Fahrzeugsitz, dessen Sitzfläche in der Neigung (in Fahrtrichtung gesehen) und/oder in der Höhe verstellbar ist.

Zum Zweck der Höhen- und/oder Neigungsverstellung der Sitzfläche ist es bekannt, verstellbare Traghebel oder sonstige Tragelemente zwischen dem Oberrahmen des Schwingsystems und einem weiteren, der Sitzfläche zugeordneten Sitzflächenrahmen vorzusehen, und zwar im vorderen und im hinteren Sitzflächenbereich, so daß durch eine gleichbemessene Verstellung aller Traghebel die Höhe der Sitzfläche oder - durch Verstellung nur der vorderen oder nur der hinteren Traghebel - die Neigung der Sitzfläche verändert werden kann. Eine derartige Vorrichtung zwischen Oberrahmen des Schwingsystems und Sitzflächenrahmen erfordert einen erheblichen konstruktiven Einbauraum (Einbauhöhe).

Um den erfordlichen Einbauraum zu verringern, ist es bekannt geworden, die verstellbaren Traghebel oder Tragelemente nur im vorderen Sitzflächenbereich anzuordnen. Dementsprechend bewirken sie nur eine Neigungsverstellung der Sitzfläche nach hinten. Um auch die Höhenverstellung der Sitzfläche zu ermöglichen, ist es bei Sitzen dieser Art bekannt, ein Schwingsystem zu verwenden, das paarweise sich kreuzende Scherenlenker aufweist, die in ihrem Scherenkreuzungspunkt durch eine horizontale Schwenkachse (Scherengelenk) miteinander verbunden sind, wobei dann die gewünschte Höhenverstellung der Sitzfläche durch einen steileren oder flacheren Anstellwinkel der sich kreuzenden Scherenlenker bewirkt werden kann.

Das hat jedoch den Nachteil, daß zugleich mit der Höhenverstellung der Sitzfläche die sogenannte statische Höhe des Schwingsystems (das ist die mid ride position, um die der Sitz während des Fahrbetriebes vertikal schwingt) verändert wird. Auch verändern sich dadurch die geometrischen Anlenkungs-Verhältnisse der übrigen Systemelemente des Schwingsystems, wie z.B. Luftfeder, Schwingungsdämpfer o.dgl., so daß sich im Ergebnis mit der auf diese Weise durchgeführten Höhenverstellung der Sitzfläche zugleich die Schwingungscharakteristik des Schwingsystems insgesamt verändert.

Fahrzeugsitze mit Schwingsystemen, die ein Scherengelenk aufweisen, sind z.B. aus der US-A-4 125 242 oder der US-A-3 888 451 bekannt.

Aufgabe der Erfindung ist es, einen Fahrzeugsitz mit einem scherenförmigen Schwingsystem zu schaffen, bei dem die gewünschte Neigungs- und/oder Höhenverstellung der Sitzfläche möglichst wenig konstruktiven Einbauraum beansprucht und bei deren Handhabung keine Veränderungen der statischen Höhe oder anderer Schwingungscharakteristiken des Schwingsystems auftreten.

Von einem Fahrzeugsitz mit einem gemäß Oberbegriff an sich bekannten Schwingsystem ausgehend, wird diese Aufgabe erfindungsgemäß dadurch gelöst, daß die Scherenlenker jeweils aus zwei Lenkerteilstücken gebildet sind, nämlich aus einem oberen Teilstück, das sich von dem Scherengelenk bis zur Anlenkung am Oberrahmen erstreckt, und einem unteren Teilstück, das sich von dem Scherengelenk bis zur Anlenkung am Unterrahmen erstreckt, und daß die zwei Lenkerteilstücke eines Scherenlenkers um das Scherengelenk relativ zueinander winkelverstellbar und in ihren jeweiligen Winkelverstellpositionen relativ zueinander fixierbar sind.

Die Winkelverstellbarkeit der oberen Lenkerteilstücke im vorderen Sitzflächenbereich oder derjenigen im hinteren Sitzflächenbereich reichen aus, um eine Neigungsverstellung der Sitzfläche zu realisieren. Sind jedoch die winkelverstellbaren Lenkerteilstücke sowohl im vorderen als auch im hinteren Sitzflächenbereich vorhanden, dann ist auch die gewünschte Höhenverstellung der Sitzfläche durch eine gleich bemessene Winkelverstellung aller oberen Teilstücke der Scherenlenker relativ zu ihren jeweiligen unteren Teilstücken zu realisieren.

Grundsätzlich beinhaltet die Lehre der Erfindung, daß die jeweiligen oberen, winkelverstellbaren Teilstücke der Scherenlenker von allen Anlenkungen anderer Systemelemente des Schwingsystems, die die Schwingungscharakteristik des Schwingsystems einflussen können, wie z.B. Luftfeder, Schwingungsdämpfer o.dgl., frei gehalten sind. Das entspricht durchaus der Üblichkeit der Bauweise bekannter Fahrzeugsitze. Dort sind derartige Systemelemente so eingebaut, daß sie einerseits am Unterrahmen des Schwingsystems befestigt sind und andererseits an den Scherenlenkern unterhalb der Scherengelenke oder an den Scherengelenken selbst angreifen. Durch die Verwendung dieser bekannten Bauarten des Schwingsystems wird gewährleistet, daß die Winkelverstellung der oberen Lenkerteilstücke nicht zur Folge haben kann, daß sich an der Schwingungscharakteristik des Schwingsystems oder an dessen statischer Höhe irgendetwas ändert.

Die Lehre der Erfindung beinhaltet auch, daß grundsätzlich ein weiterer, der Sitzfläche zugeordneter Sitzflächenrahmen entfallen kann und daß nunmehr die Sitzfläche direkt auf dem Oberrahmen des Schwingsystems montiert werden kann. Das ist sehr kostengünstig und platzsowie gewichtssparend.

Hinsichtlich der konstruktiven Ausführung der Winkelverstellbarkeit und der Fixierung der Lenkerteilstücke relativ zueinander sind die Ausführungsformen der Erfindung nach den Ansprüchen 2 bis 5 besonders zweckmäßig.

Nachfolgend werden Ausführungsbeispiele der Erfindung anhand der Zeichnungen näher beschrieben. Es zeigen:
- Fig. 1: die Seitenansicht eines Schwingsystems mit integrierter Neigungsverstellung der Sitzfläche,
- Fig. 2: den Querschnitt durch das Schwingsystem nach Fig. 1 entlang der Linie A-A,

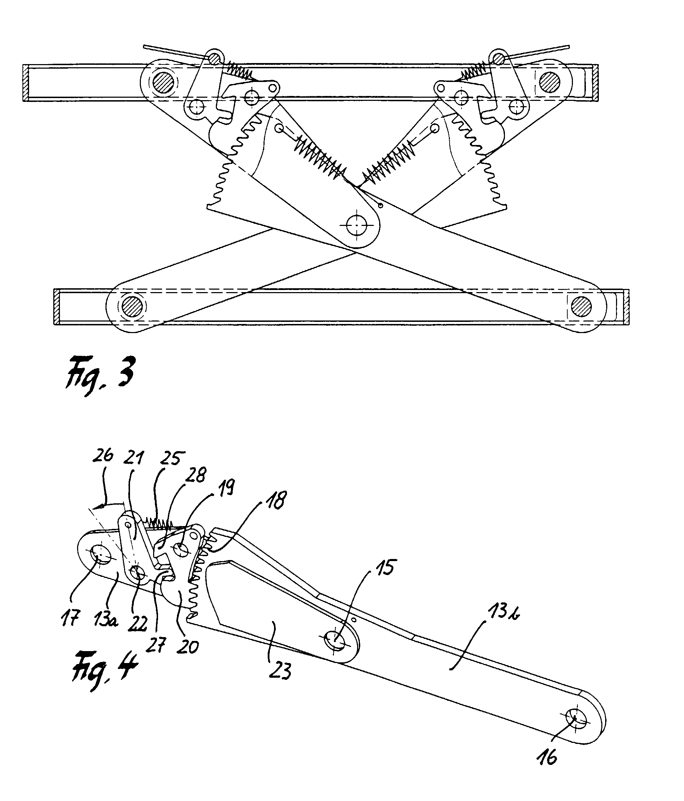

- Fig. 3: die Seitenansicht eines Schwingsystems mit integrierter Neigungs- und/oder Höhenverstellung der Sitzfläche,
- Fig. 4: eine perspektivische Einzeldarstellung eines Scherenlenkers nach den Fig. 1 bis 3,
- Fig. 5 + 6: einen Scherenlenker, der mittels eines Stangen/Schlingfederelementes winkelverstellbar und fixierbar ist,
- Fig. 7: einen Scherenlenker, der mittels eines Stellzylinders winkelverstellbar und fixierbar ist,
- Fig. 8 + 9: einen Scherenlenker, der mittels eines Planetenrad-Stellgetriebes winkelverstellbar und fixierbar ist.

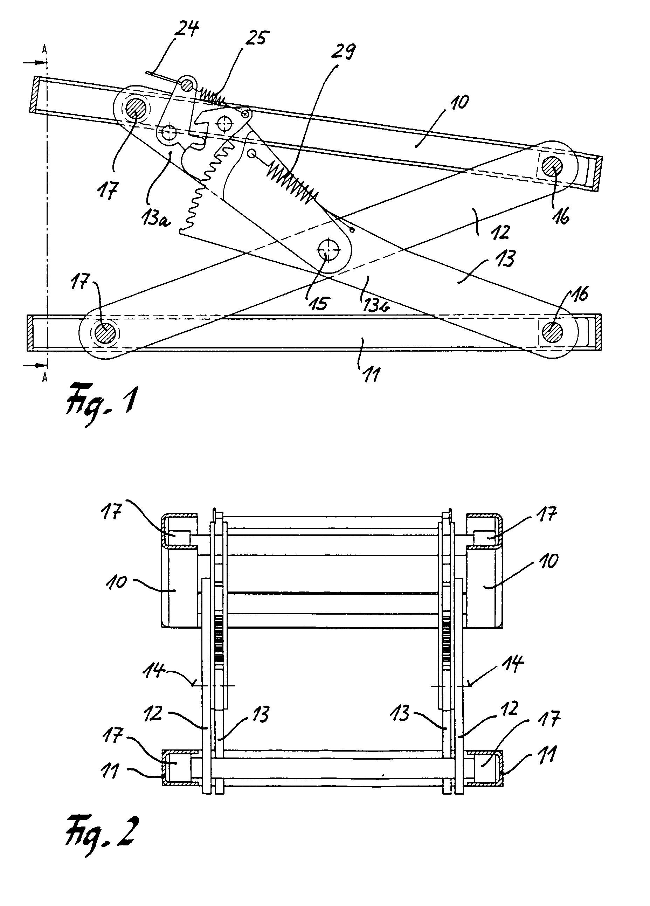

Dargestellt in den Fig. 1 und 2 ist ein Schwingsystem mit einem Oberrahmen 10 und einem Unterrahmen 11. Der Unterrahmen 11 ist kraftschlüssig mit dem Boden der Fahrzeugkabine verbunden, wie dies bei Fahrzeugsitzen in vielen Variationen bekannt ist. Auf den Oberrahmen 10 ist die Sitzfläche des Fahrzeugsitzes direkt montierbar. Die Sitzfläche kann z.B. in gepolsterter Ausführung eine Sitzschale aus Metall oder Kunststoff sein, wie dies bei Fahrzeugsitzen bekannt ist. Sie ist als bekanntes Bauteil in der Zeichnung nicht dargestellt.

Das dargestellte Schwingsystem besitzt an jeder Seite zwei sich paarweise kreuzende Scherenlenker 12 und 13, die in ihrem Scherenkreuzungspunkt durch eine horizontale Schwenkachse 14 (= Scherengelenk 15) miteinander verbunden sind und die jeweils mit ihren oberen und unteren Enden entweder mittels eines festen Drehlagers 16 oder mittels eines verschiebbaren Drehlagers (= Rollenlager 17) am Oberrahmen 10 bzw. am Unterrahmen 11 angelenkt sind. Das ist alles ein bekannter Stand der Technik und erfordert keine detaillierte Beschreibung.

Neu ist, daß die Scherenklenker 13, von denen je einer an jeder Seite des Schwingsystems vorhanden ist (siehe Fig. 2), jeweils aus zwei Lenkerteilstücken gebildet sind, und zwar dem oberen Lenkerteilstück 13a und dem unteren Lenkerteilstück 13b. Beide Teilstücke sind relativ zueinander um das Scherengelenk 15 winkelverstellbar und in ihren jeweiligen Winkelverstellpositionen relativ zueinander fixierbar.

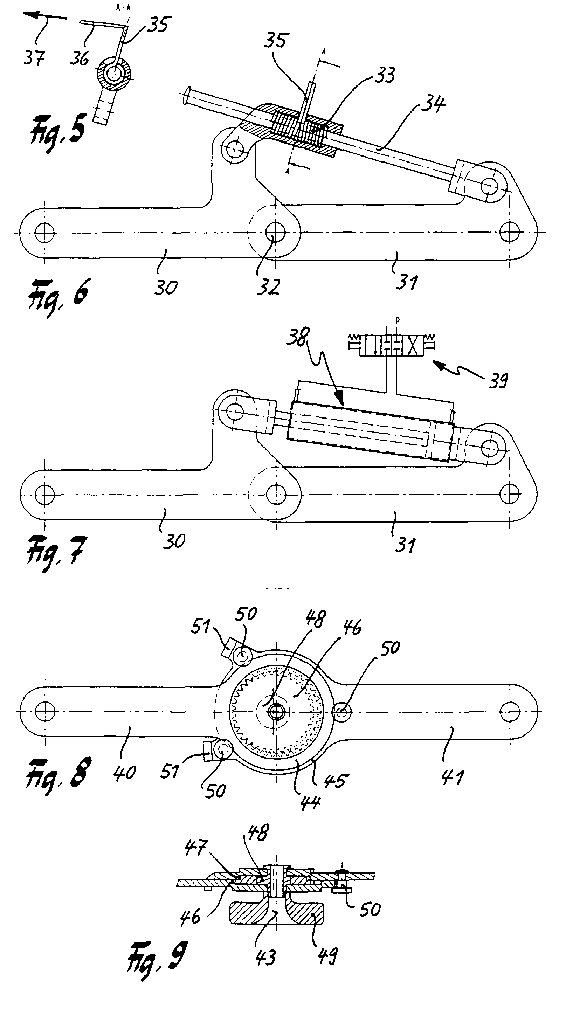

Der winkelverstellbare Scherenlenker 13 ist in Fig. 4 perspektivisch dargestellt. Das untere Lenkerteilstück 13b erstreckt sich über das Scherengelenk 15 hinaus und ist an seinem dortigen Ende mit einem Zahnbogen 18 versehen. In diesen Zahnbogen greift ein an dem oberen Lenkerteilstück 13a in der Achse 19 schwenkbar gelagerter Zahneingriffsbügel 20 ein, der in seiner Eingriffsposition mittels des Sperrhebels 21 gesichert ist. Der Sperrhebel 21 ist in der Achse 22 ebenfalls an dem oberen Lenkerteilstück 13a schwenkbar gelagert. Das obere Lenkerteilstück 13a ist verstärkt durch eine Deckplatte 23, die in den Zeichnungen nur teilweise dargestellt ist. Diese Deckplatte ist in ihrer Kontur genau so geformt wie das obere Lenkerteilstück 13a und deckt gemeinsam mit dieser sandwichartig den Zahnbogen 18, den Zahneingriffsbügel 20 und den Sperrhebel 21 ab.

Zum Betätigen der Winkelverstellung des Scherenlenkers 13 wird mittels eines Bowdenzuges 24 (siehe Fig. 1) der Sperrhebel 21 gegen die Kraft der Zugfeder 25 um seine Achse 22 in Richtung des Pfeiles 26 (siehe Fig. 4) verschwenkt. Dabei kontaktiert seine Sperrnase 27 den Ansatz 28 am Zahneingriffsbügel 20 und zieht diesen aus seinem Eingriff mit dem Zahnbogen 18. Nach dem Öffnen der ineinandergreifenen Zahnsegmente kann die Winkelverstellposition des oberen Lenkerteilstücks 13a relativ zum unteren Lenkerteilstück frei gewählt werden. Dabei unterstützt die Zugfeder 29 (siehe Fig. 1) die Winkelverstellung nach oben, so daß der Sitzbenutzer durch mehr oder weniger starke Gewichtsbelastung des Sitzflächenbereiches, in dem das obere Lenkerteilstück 13a positioniert ist, die gewünschte Winkelverstellposition bestimmen kann.

Fig. 1 zeigt eine Ausführungsform der Erfindung, mittels der die Neigung der Sitzfläche verstellt werden kann. Fig. 2 zeigt eine Ausführungsform der Erfindung, mittels der die Neigung und/oder die Höhe der Sitzfläche verstellt werden kann. Beide Ausführungsformen verwenden den winkelverstellbaren Scherenlenker gemäß Fig. 4.

Die Fig. 5 bis 9 zeigen andere Ausführungsbeispiele von winkelverstellbaren Scherenlenkern.

Gemäß den Fig. 5 und 6 sind die zwei Lenkerteilstücke 30, 31 um das Gelenk 32 winkelverstellbar und relativ zueinander fixierbar. Zu diesem Zweck wird ein spiegelsymmetrisch zur Schnittebene A-A geformtes Schlingfederelement 33 verwendet, das auf der Stange 34 aufsitzt und auf dieser verschiebbar ist, sobald die Federschenkel 35 des Schlingfederelementes mittels eines Bowdenzuges 36 o.dgl. in Richtung des Pfeiles 37 gezogen werden.

Fig. 7 zeigt die zwei Lenkerteilstücke 30, 31, die relativ zueinander mittels eines druckmittelbeaufschlagten Stellzylinders 38 winkelverstellbar sind und in ihren jeweiligen Winkelverstellpositionen relativ zueinander dadurch fixierbar sind, daß die Druckmittel-Zuleitungen und/oder Ableitungen zum Stellzylinder mittels eines handelsüblichen Wegeventils 39 blockierbar sind. Als Druckmittel kann sowohl Luft als auch eine Hydraulikflüssigkeit verwendet werden.

Die Fig. 8 und 9 zeigen zwei Lenkerteilstücke 40, 41, die um die Gelenkachse 43 relativ zueinander winkelverstellbar sind. Die Winkelverstellung erfolgt mittels eines Planetenrad-Stellgetriebes, das in seinem grundsätzlichen konstruktiven Aufbau bekannt ist. Es besteht im wesentlichen aus zwei innenverzahnten Hohlrädern 44 und 45 und einem mit beiden Hohlrädern gleichzeitig kämmenden außenverzahnten Exzenterrad 46.

Das eine Hohlrad 44 ist Bestandteil des darstellungsgemäß linken Lenkerteilstücks 40 und besitzt die Innenverzahnung 46. Das andere Hohlrad 45 ist Bestandteil des darstellungsgemäß rechten Lenkerteilstücks 41 und besitzt die Innenverzahnung 47. Die Innenverzahnungen 46 und 47 haben eine unterschiedliche Anzahl von Zähnen, beispielsweise ist die Innenverzahnung 46 mit 38 Zähnen und die Innenverzahnung 47 mit 31 Zähnen versehen.

Das Exzenterrad 46 wird mittels des auf der Exzenterwelle 48 sitzenden Handrades 49 verstellt. Das Exzenterrad kämmt gleichzeitig mit der Innenverzahnung 46 des Hohlrades 44 (= linkes Lenkerteilstück 40) und mit der Innenverzahnung 47 des Hohlrades 45 (= rechtes Lenkerteilstück 41). Da auch das Exzenterrad für jede Kämmung eine unterschiedliche Anzahl von Zähnen aufweist (z.B. 35 Zähne im Eingriff mit der Innenverzahnung 46 des linken Lenkerteilstücks und 38 Zähne im Eingriff mit der Innenverzahnung 47 des rechten Lenkerteilstücks) bewirkt eine Drehung des Handrades 49 eine Winkelverstellung der beiden Lenkerteilstücke des Scherenlenkers relativ zueinander.

Das vorgenannte Planetenrad-Stellgetriebe ist einfach in seinem konstruktiven Aufbau und wird mittels drei Zapfenführungen 50 montiert, die jeweils einen Kopfanschlag aufweisen und mit dem rechten Lenkerteilstück 41 vernietet sind. Die Ansätze 51 bilden die jeweiligen Endanschläge für die Winkelverstellung der Lenkerteilstücke relativ zueinander.

Da die Verzahnungen des Planetenrad-Stellgetriebes selbsthemmend ausgeführt sind, sind die Lenkerteilstücke in ihren jeweiligen Winkelverstellpositionen grundsätzlich bei Nicht-Betätigung des Handrades 49 fixiert.

## Patentansprüche

1. Schwingfähig abgestützter Fahrzeugsitz
- mit einer Sitzfläche, die sowohl in ihrer Neigung als auch in ihrer Höhe verstellbar ist,
- und mit einem Schwingsystem, bestehend aus einem Oberrahmen (10) und einem Unterrahmen (11) und paarweise sich kreuzenden Scherenlenkern (12, 13), die in ihrem Scherenkreuzungspunkt durch ein horizontales Scherengelenk (15, 32, 43) miteinander verbunden sind und die mit ihren oberen Enden am Oberrahmen (10) und mit ihren unteren Enden am Unterrahmen (11) angelenkt sind,
**dadurch gekennzeichnet**,
- daß die Scherenlenker (12, 13) jeweils aus zwei Lenkersteilstücken gebildet sind, nämlich aus einem oberen Teilstück (13a, 30, 40), das sich von dem Scherengelenk bis zur Anlenkung am Oberrahmen (10) erstreckt, und einem unteren Teilstück (13b, 31, 41), das sich von dem Scherengelenk bis zur Anlenkung am Unterrahmen (11) erstreckt,
- und daß die zwei Lenkerteilstücke eines Scherenlenkers um das Scherengelenk (15, 32, 43) relativ zueinander winkelverstellbar und in ihren jeweiligen Winkelverstellpositionen relativ zueinander fixierbar sind.

2. Fahrzeugsitz nach Anspruch 1,
dadurch gekennkzeichnet,
- daß die Winkelverstellpositionen der Teilstücke eines Scherenlenkers relativ zueinander mittels lösbar ineinandergreifender Zahnsegmente (18, 20) wählbar und fixierbar sind,
- bestehend aus einem an dem einen Teilstück vorhandenen Zahnbogen (18) und einem an dem anderen Teilstück schwenkbar gelagerten Zahneingriffsbügel (20).

3. Fahrzeugsitz nach Anspruch 1,
dadurch gekennzeichnet,
- daß die Winkelverstellpositionen der Teilstücke eines Scherenlenkers relativ zueinander mittels eines Schlingfederelementes (33) wählbar und fixierbar sind, das auf einer Stange (34) aufsitzt und im geöffneten Zustand auf dieser verschiebbar ist,
- wobei die Stange (34) an dem einen Lenkerteilstück (31) und das Schlingfederelement (33) an dem anderen Lenkerteilstück (30) befestigt ist.

4. Fahrzeugsitz nach Anspruch 1,
dadurch gekennzeichnet,
- daß die Winkelverstellpositionen der Teilstücke eines Scherenlenkers relativ zueinander mittels eines blockierbaren, durckmittelbeaufschlagten Stellzylinders (38) wählbar und fixierbar sind,
- der zwischen je einem Hebelarm am oberen und am unteren Teilstück des Scherenlenkers angelenkt ist.

5. Fahrzeugsitz nach Anspruch 1,
dadurch gekennzeichnet,
- daß die Winkelverstellpositionen der Teilstücke eines Scherenlenkers relativ zueinander mittels eines selbsthemmenden Planetenrad-Stellgetriebes wählbar und fixierbar sind,
- das aus zwei innenverzahnten, jeweils mit einem der Lenkerteilstücke verbundenen Hohlrädern (44, 45) und einem außenverzahnten, mit beiden Hohlrädern im Eingriff stehenden Exzenterrad (46) gebildet ist.

## Claims

1. Suspension seat for a vehicle
- comprising a seat surface that is adjustable in its inclination and height
- and comprising a suspension system having an upper frame (10) and a lower frame (11), and having pairs of crossing scissor-type sets of arms (12, 13) being connected to one another at their scissor crossing points by means of a horizontal axis (15, 32, 43) and being articulated at their upper ends with the upper frame (10) and at their lower ends with the lower frame (11),
**characterized by the fact**
- that the scissor-type arms (12, 13), in each case, being formed out of two arm components, i.e. out of an upper arm-component (13a, 30, 40) extending from said horizontal axis up to its articulation at the upper frame (10), and out of a lower arm-component (13b, 31, 41) extending from said horizontal axis down to its articulation at the lower frame (11),
- and that the two arm-components of a scissor-type set of arms being angularly adjustable relative to one another about said horizontal axis (15, 32, 43) and being capable of being fixed in their respective angular adjustment positions relative to one another.

2. Seat for a vehicle in accordance with Claim 1
**characterized by the fact**
- that the angular adjustment positions of the arm-components of a scissor-type set of arms are capable of being selected and of being fixed in positions relative to each other by means of releasably inter-meshing toothed segments (18, 20)
- that consist of an arc of teeth (18) provided at one of the arm-components and a pawl (20) pivotably mounted to the other arm-component.

3. Seat for a vehicle in accordance with Claim 1
**characterized by the fact**
- that the angular adjustment positions of the arm-components of a scissor-type set of arms are capable of being selected and of being fixed relative to each other by means of a spiral spring element (33) that is positioned on a rod (34) and, in the open position, is capable of displacement thereon,
- whereby the rod (34) is attached to one arm-component (31) and the spiral spring element (33) is attached to the other arm-component (30).

4. Seat for a vehicle in accordance with Claim 1
**characterized by the fact**
- that the angular adjustment positions of the arm-components of a scissor-type set of arms are capable of being selected and of being fixed relative to each other by means of a pressurized adjusting cylinder (38) that is capable of being blocked
- the adjusting cylinder is articulated between a lever arrangement at the upper arm-component and a lever arrangement at the lower arm-component of the scissor-type set of arms.

5. Seat for a vehicle in accordance with Claim 1
**characterized by the fact**
- that the angular adjustment positions of the arm-components of a scissor-type set of arms are capable of being selected and of being fixed relative to each other by means of a self-braking planetary setting gear
- that is formed from two internally toothed hollow wheels (44, 45) that are connected to one of the arm-components and an externally toothed eccentric wheel (46) that simultaneously meshes with both hollow wheels.

## Revendications

1. Siège de véhicule monté saillant muni d'une surface d'assise qui est réglable aussi bien en inclinaison qu'en hauteur,
- et d'un système oscillant se composant d'un cadre supérieur (10) et d'un cadre inférieur (11) et de bras de ciseaux (12, 13) se croisant par paires et qui sont reliés l'un à l'autre à leur point de croisement de ciseaux par une articulation de ciseaux horizontale (15, 32, 43) et qui sont articulés à leurs extrémités supérieures au cadre supérieur (10) et à leurs extrémités inférieures au cadre inférieur (11),
caractérisé en ce que
- les bras de ciseaux (12, 13) sont constitués chacun de deux pièces partielles de bras, à savoir d'une pièce partielle supérieure (13a, 30, 40) qui s'étend depuis l'articulation de ciseaux jusqu'à l'articulation sur le cadre supérieur (10) et d'une pièce partielle inférieure (13b, 31, 41) qui s'étend depuis l'articulation de ciseaux jusqu'à l'articulation sur le cadre inférieur (11),
- et en ce que les deux pièces partielles d'articulation d'un bras de ciseaux autour de l'articulation de ciseaux (15, 32, 43) sont réglables angulairement l'une par rapport à l'autre et sont susceptibles d'être fixées l'une par rapport à l'autre dans chacune de leurs positons réciproques de réglage angulaire.

2. Siège de véhicule selon la revendication 1, caractérisé en ce que
- les positions de réglage angulaire des pièces partielles d'un bras de ciseaux sont susceptibles d'être positionnées et d'être fixées l'une par rapport à l'autre au moyen de segments dentés (18, 20) s'engrenant l'un dans l'autre de façon amovible,
- ces segments se composant d'un arc denté (18) présent sur l'une des pièces partielles et d'une fourchette (20) d'encliquetage de denture montée pivotante sur l'autre pièce partielle.

3. Siège de véhicule selon la revendication 1, caractérisé en ce que
- les positions de réglage angulaire des pièces partielles d'un bras de ciseaux sont susceptible d'être positionnées et fixées l'une par rapport à l'autre au moyen d'un élément de ressort enroulé (33), qui est monté sur une tige ou barre (34) et qui à l'état ouvert est susceptible de coulisser sur cette barre,
- la barre (34) étant fixée sur l'une des pièces partielles de bras (31) et l'élément de ressort enroulé (33) étant fixé sur l'autre pièce partielle de bras (30).

4. Siège de véhicule selon la revendication 1, caractérisé en ce que
- les positions de réglage angulaire des pièces partielles d'un bras de ciseaux sont susceptibles d'être positionnées et d'être fixées au moyen d'un vérin de positionnement (38) bloquable et actionné par un fluide sous pression,
- et qui est articulé entre un bras de levier respectif sur la pièce partielle supérieure et inférieure du bras de ciseaux.

5. Siège de véhicule selon la revendication 1, caractérisé en ce que
- les positions de réglage angulaire des pièces partielles d'un bras de ciseaux sont susceptibles d'être positionnées et d'être fixées l'une par rapport à l'autre au moyen d'un train d'engrenage de réglage autobloquant à train épicycloïdal, ce train d'engrenage se composant d'une part de deux roues dentées creuses ou couronnes dentées (44, 45) à denture intérieure et reliées chacune à l'une des pièces partielles d'articulation, et d'autre part, d'une roue dentée excentrée (46) à denture extérieure et engrenée sur les deux couronnes dentées.
